# FASCICULE DE BREVET EUROPEEN

(11) **EP 2 936 767 B1**
(45) Date de publication et mention de la délivrance du brevet: **12.02.2020**
(21) Numéro de dépôt: 13814031.4
(22) Date de dépôt: 18.11.2013
(51) Int. Cl.: H04L 29/06, H04W 12/06

(54) **PROCÉDÉS DE SÉCURISATION DE TRANSMISSION DE DONNÉES ET DE CONTROLE D'AUTHENTIFICATION DE NOEUDS D'UN RÉSEAU AD HOC**
VERFAHREN ZUM SCHUTZ VON DATENÜBERTRAGUNGEN UND ZUR DURCHFÜHRUNG EINER AUTHENTIFIKATIONSPRÜFUNG VON AD-HOC-NETZWERKKNOTEN
METHODS FOR PROTECTING DATA TRANSMISSIONS AND FOR CARRYING OUT AN AUTHENTICATION CHECK OF AD HOC NETWORK NODES

(30) Priorité: 21.12.2012 FR 1203585
(43) Date de publication de la demande: 28.10.2015
(73) Titulaire: Airbus DS SAS, 78990 Elancourt (FR)
(72) Inventeur: DENIAUD, Thierry, F-78180 Montigny le Bretonneux (FR); CARNUS, Romain, F-75020 Paris (FR)
(74) Mandataire: Cabinet Camus Lebkiri
(86) Numéro de dépôt international: PCT/EP2013/003461
(87) Numéro de publication internationale: WO 2014/094948

(56) Documents cités:
- ADNANE A ET AL: "Trust-Based Countermeasures for Securing OLSR Protocol", COMPUTATIONAL SCIENCE AND ENGINEERING, 2009. CSE '09. INTERNATIONAL CONFERENCE ON, IEEE, PISCATAWAY, NJ, USA, 29 août 2009 (2009-08-29), pages 745-752, XP031543704, ISBN: 978-1-4244-5334-4
- KHADIDJA AYAD ET AL: "New efficient mechanisms to secure OLSR protocol", FUTURE GENERATION COMMUNICATION TECHNOLOGY (FGCT), 2012 INTERNATIONAL CONFERENCE ON, IEEE, 12 décembre 2012 (2012-12-12), pages 46-51, XP032340865, DOI: 10.1109/FGCT.2012.6476572 ISBN: 978-1-4673-5859-0

## Description

### Domaine Technique

Le domaine de l'invention concerne la sécurisation des transmissions dans un réseau ad hoc et l'authentification des nœuds tels que des équipements réseaux ou terminaux. Une problématique réside dans l'architecture de tels réseaux dans lesquels la topologie est dynamique et dans lesquels une grande flexibilité de configuration et une sécurité maximale doivent être fournies. Les approches centralisées des schémas de confiance et de distribution des clés ne peuvent convenir pour de tels réseaux. La décentralisation des contrôles d'accès et d'authentification implique que chaque nœud est capable de mettre en œuvre à minima certaines exigences de sécurité pour préserver l'intégrité du réseau, pour préserver le réseau d'attaques, d'intrusions ou d'usurpation d'identités ou encore de substitution d'adresses réseaux.

### Etat de la technique et problèmes techniques rencontrés

Les protocoles de routage permettent aux nœuds de connaître la topologie du réseau, de calculer les routes pour joindre d'autres nœuds et de distribuer aux différents nœuds du réseau les routes ainsi calculées. En outre, un protocole de routage peut intégrer des éléments de sécurité pour sécuriser le réseau d'attaques internes ou externes (intrusion non-autorisée dans le réseau, usurpation d'identité, corruption des données d'un message, etc.). La sécurisation du protocole de routage est nécessaire pour préserver l'intégrité du réseau.

Le protocole OLSR, dont l'acronyme signifie dans la terminologie anglo-saxonne : « Optimized Link State Routing Protocol », est particulièrement adapté aux réseaux ad hoc de type mobile et sans fil.

Ce protocole s'appuie sur l'utilisation de relais multipoints (MPR) et permet l'échange des informations de topologie (voisinage, état des liens, liste des voisins à un nœud l'ayant choisi comme MPR) entre les différents nœuds via les messages HELLO et TC. Ces informations de topologie permettent de construire les tables de routage utilisées dans le routage des paquets de données.

En revanche, le protocole OLSR ne comprend pas toutes les couches de sécurité nécessaires à la protection complète d'un réseau ad hoc. A titre d'exemple, le protocole OLSR ne prend pas en compte les problématiques relatives à l'authentification, notamment vis-à-vis de l'arrivée d'un nouveau nœud dans le réseau. Un nœud malicieux peut aussi usurper l'identité d'un nœud sain. Un nœud malicieux peut aussi corrompre les messages du protocole de routage pour transformer la topologie du réseau vue par tous les nœuds (y compris les nœuds sains) à sa guise.

Pour résoudre en partie la problématique de la sécurité et de la prémunition contre des attaques extérieures et intérieures au réseau, les authentifications de nœuds, la distribution de clefs et la signature des messages peuvent permettre de sécuriser un réseau.

Pour cela, des solutions ont été proposées pour être compatible du protocole OLSR. Il existe le protocole SOLSR, désignant « Secure OLSR » (basée sur des signatures pour l'authentification des paquets OLSR et sur l'utilisation de clés symétriques) ; la solution nommée « Web-of-trust OLSR extension » (basée sur des signatures pour l'authentification des paquets OLSR ; la distribution des clés s'effectuant par un principe basé sur le « PGP web-of-trust »). Ces solutions ont été implémentées sous formes de plug-ins pour le démon OLSRd. Ces dernières améliorations permettent de prendre en compte certaines problématiques d'authentification de manière à répondre aux exigences d'un réseau sécurisé.

Une autre solution est une solution basée sur le protocole OLSR mettant en œuvre de nouveaux types de messages (message de signature) pour authentifier les messages HELLO et TC. Ces messages permettent de distribuer des signatures, de mettre en œuvre des minuteurs ou encore de gérer le nombre et les séquences de messages pour effectuer des contrôles.

Un mécanisme de clef publique et de clefs privées peut être mis en œuvre pour permettre de crypter des données transmises dans le réseau. Un mécanisme de distribution de certificats d'authentification peut être associé avec le précédent mécanisme pour garantir la confiance qu'un nœud peut porter à un autre nœud. Cette solution permet d'augmenter le niveau de sécurité d'un réseau mobile ad hoc.

En revanche, de tels mécanismes ne permettent pas d'éviter les attaques internes provenant du réseau telles que celles connues sous le nom « link-spoofing » (mascarade).

Concernant la distribution des éléments de sécurité nécessaires pour l'authentification des nœuds, deux approches existent :
- une approche centralisée (exemples : Kerberos plutôt pour des réseaux fixes ; « Public Key Infrastructure » s'appuyant sur une autorité de certification mais nécessitant la présence constante d'un entité centrale) ;
- une approche décentralisée (exemples : « web-of-trust » type PGP mais avec des problèmes de distribution des certificats ; « Public Key Infrastructure » distribué).

Il existe également des solutions décrites dans les documents suivants des auteurs ADNANE A ET AL : « Trust-Based Countermeasures for Securing OLSR protocol » de la référence Computational Science and Engineering, 2009 ou encore le document des auteurs KHADIDJA ATAD ET AL : « New efficient mechanisms to secure OLSR protocol » de la référence Future Generation Communication Technology (FGCT), 2012 International conférence On, IEEE, 12 décembre 2012. Mais ces derniers documents ne permettent pas de résoudre les inconvénients précités.

### Exposé de l'invention

L'invention permet de résoudre les inconvénients précités.

L'invention est divulguée par deux procédés alternatifs de sécurisation de transmission de données mis en œuvre par un nœud émetteur d'un réseau ad hoc, selon les revendications 1 et 3. Procédé de contrôle de données d'authentification mis en œuvre par un second nœud récepteur d'un réseau ad hoc, selon la revendication 8. Un nœud émetteur selon la revendication 14, et un nœud récepteur selon la revendication 15 sont également revendiquées pour la mise en place du procédé de sécurisation de l'invention. Des modes de réalisation supplémentaires sont décrits dans les revendications dépendantes.

### Brève description des figures

D'autres caractéristiques et avantages de l'invention ressortiront à la lecture de la description détaillée qui suit, en référence aux figures annexées, qui illustrent :
- figure 1 : un modèle d'authentification de message de l'invention, partagé par les différents services réseaux générant du trafic de contrôle ;
- figure 2 : un schéma d'architecture centré autour d'une base de données nommée ID TABLE, comprenant tous les éléments pour permettre l'authentification des messages et la sécurisation des protocoles ;
- figure 3 : une parade à l'intrusion dans le réseau par usurpation d'identité, selon un procédé de l'invention ;
- figure 4 : une parade à l'intrusion dans le réseau par usurpation de l'adresse IP, selon un procédé de l'invention ;
- figure 5 : un exemple de stockage de données d'authentification par un nœud du réseau, selon un procédé de contrôle de l'invention ;
- figure 6 : un premier exemple d'échanges de données, selon le procédé de sécurisation de l'invention ;
- figure 7 : un second exemple d'échanges de données, selon le procédé de sécurisation de l'invention.

### Description de l'invention

Dans la suite de la description, on nomme un « nœud générateur » : le premier nœud envoyant un message d'un protocole de routage vers un nœud destinataire, le message parcourant une route calculée par une table de routage et comprenant en général une pluralité de nœuds intermédiaires.

Un « nœud émetteur » est un nœud qui génère un message ou qui le transfert à un nœud voisin qui est sur une route à destination d'un nœud destinataire.

Un « nœud récepteur » est un nœud recevant un message qui lui est soit destiné, soit non destiné. Dans ce dernier cas, le nœud récepteur après un traitement de données, tel qu'un contrôle d'authentification, autorise ou non le transfert du message vers le nœud destinataire ou le prochain nœud voisin sur la route.

Dans la suite de la description, les fonctions d'authentification comprennent les fonctions habituellement utilisées pour les services d'authentification et comprennent également les procédés de l'invention qui constituent des services améliorant la sécurité des transferts de données dans un réseau ad hoc.

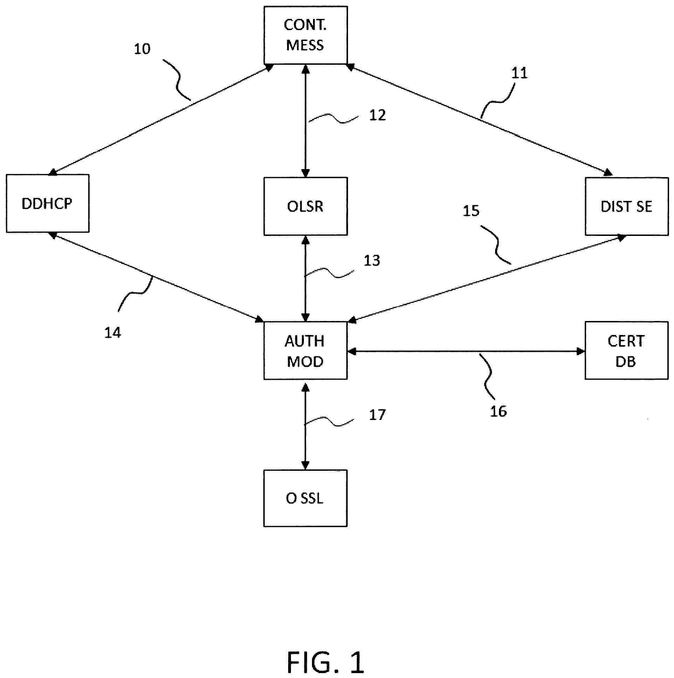

La figure 1 représente une architecture représentant les composants essentiels pour la mise en œuvre des procédés de l'invention. Selon un mode de réalisation, le composant OLSR permet de traiter les messages entrants et sortants relatifs au protocole de routage OLSR. Les fonctions permettant la gestion de l'interface du nœud pour la réception et l'émission des messages de contrôle sont représentées par un composant « CONT. MESS » sur la figure 1. Les interactions entre les composants OLSR et CONT. MESS sont représentées par le lien 12. Un nœud générateur vu par un nœud récepteur peut prendre part à la topologie du réseau et les informations et les données relatives au nœud générateur peuvent être ensuite sauvegardée dans la table « ID TABLE » qui est décrite ci-après lorsque les messages OLSR ont été acceptés après contrôle d'authentification.

Un composant DDHCP permet de traiter les messages entrants et sortants relatifs au protocole DDHCP. Les interactions entre les composants DDHCP et CONT. MESS sont représentées par le lien 10. L'adresse IP obtenue par le protocole peut être ensuite sauvegardée dans la table « ID TABLE » qui est décrite ci-après lorsque les messages ont été acceptés après contrôle d'authentification.

Un composant supplémentaire « DIST SE » permet de traiter les messages entrants et sortants relatifs à un service distribué autre que DDHCP et OLSR. Les interactions entre les composants DIST SE et CONT. MESS sont représentées par le lien 11.

Un composant AUTH MOD prend en charge les opérations pour vérifier la validité de l'authentification (vérification de signature) pour les messages entrants associés aux protocoles DDHCP (lien 14), OLSR (lien 13) ou à tout autre service distribué (lien 15). Ce composant AUTH MOD prend aussi en charge le calcul des signatures des messages sortants associés aux protocoles DDHCP (lien 14), OLSR (lien 13) ou à tout autre service distribué (lien 15) lorsque le nœud est le nœud générateur du message. La méthode d'authentification pour protéger le trafic de contrôle est basée sur la cryptographie à clé publique. Les services distribués doivent être adaptés pour que les messages protocolaires transportent signature et identifiant..

Le composant CERT DB permet la gestion des certificats d'authentification du nœud et des certificats d'authentification connus du nœud qui les stocke. Les certificats d'authentification peuvent être sauvegardées dans une base qui est régulièrement mise jour. Une interface 16 permet aux fonctions de contrôle et de gestions des données d'authentification d'accéder aux certificats d'authentification CERT DB.

Le composant O SSL permet de stocker les outils cryptographiques servant aux fonctions d'authentifications du composant AUTH MOD. Il peut s'agir d'une bibliothèque de fonctions telle que par exemple une fonction de hachage ou encore une fonction chiffrement de données. Le composant AUTH MOD accède au services du composant O SSL au moyen d'une interface 17.

Enfin, le composant AUTH MOD avec le composant CERT DB permettent la sauvegarde de données d'authentification et leur organisation de manière à garantir l'authentification des nœuds entrant en communication avec le nœud considéré dans la figure 1. En outre, le composant AUTH MOD permet d'assurer un degré élevé de sécurité notamment en ce qui concerne les intrusions extérieurs et les substitutions au sein même du réseau. Les composants AUTH MOD et CERT DB permettent l'exécution des procédés de l'invention et sont détaillés ci-après.

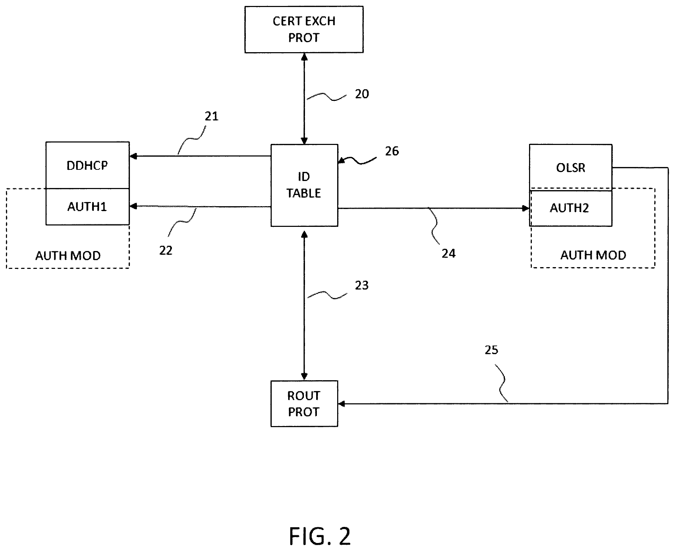

La figure 2 permet de décrire plus en détail les différentes fonctions nécessaires à la réalisation des procédés de l'invention. Le composant CERT DB comprend une table de données regroupant différentes données d'authentifications stockées dans un nœud. Les données d'authentifications concernent les données de nœuds connus d'un nœud donné du réseau notamment ceux stockés dans la table de routage, notée ROU PROT, dans la figure 2. Notamment, les données d'authentification sont sauvegardées dans une table 26, notée ID TABLE, sur la figure 2. La table ID TABLE permet d'associer à un identifiant d'un nœud connu, un certificat d'authentification correspondant. Cette association permet de contrôler l'authentification d'un message reçu provenant d'un nœud connu de la table de routage. La table ID TABLE peut être stockée dans le composant CERT DB.

Le procédé de contrôle de l'invention permet la mise à jour de l'ID TABLE au moyen d'un protocole d'échange de certificats représenté par le bloc CERT EXCH PROT et le lien 20. Les fonctions d'authentification réalisées par le composant AUTH MOD permettent de réaliser des opérations utilisant les données stockées dans l'ID TABLE et les données extraites des messages entrants (vérification de signature).

Notamment, l'authentification des messages entrants relatifs au protocole DDHCP peuvent être réalisées au niveau du composant assurant la mise en œuvre du protocole d'adressage DDHCP via le composant AUTH MOD par la vérification de la signature de messages entrants. En utilisant l'identifiant contenu dans la signature, le service peut récupérer les certificats correspondants dans l'ID TABLE du composant CERT DB pour la vérification de signature et peut vérifier que l'adresse IP correspond à celle du nœud générateur. Les liens 21 et 22 entre l'ID TABLE et la fonction authentification AUTH1 du composant AUTH MOD utilisant son interface avec le composant DDHCP est illustré sur la figure 2.

Notamment, l'authentification des messages entrants relatifs au protocole OLSR peuvent être réalisées au niveau du protocole de routage OLSR via le composant AUTH MOD par la vérification de la signature de messages entrants. En utilisant l'identifiant contenu dans la signature, le service peut récupérer les certificats correspondants dans l'ID TABLE du composant CERT DB pour la vérification de signature et peut vérifier que l'adresse IP correspond à celle du nœud générateur. Le lien 24 entre l'ID TABLE et la fonction authentification AUTH2 du composant AUTH MOD utilisant le composant OLSR est illustré sur la figure 2.

Un avantage de l'architecture permettant la réalisation des procédés de l'invention est que les fonctions d'authentification sont réalisées indépendamment du protocole d'échange de certificats.

La table de routage d'un nœud, notée ROUT PROT, est représentée sur la figure 2. Elle s'interface nécessairement avec la couche OLSR permettant d'implémenter les fonctions relatives au protocole de routage du réseau ad hoc. Cette interface est représentée par le lien 25 de la figure 2.

Une interface 23 entre la table de routage ROUT PROT et l'ID TABLE permet d'effectuer des contrôles et des synchronisations entre la table de routage et la table ID TABLE.

Un autre protocole de routage qu'OLSR, de la même famille qu'OLSR (protocole de routage proactif) pourrait néanmoins être utilisé dès lors que les étapes des procédés de l'invention puissent s'appuyer sur les fonctions nécessaires d'un tel protocole de routage.

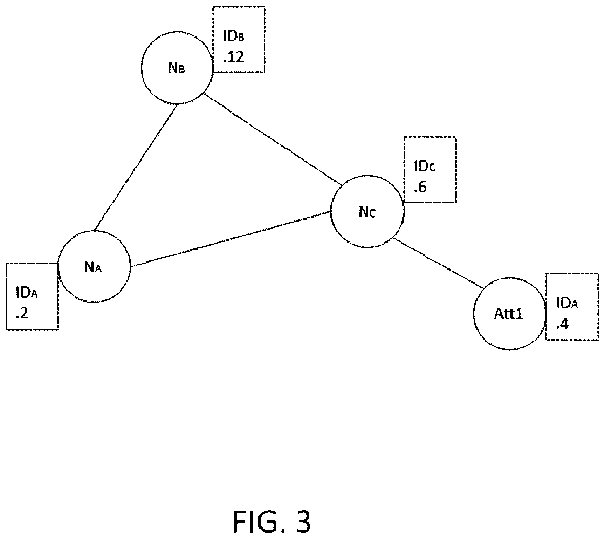

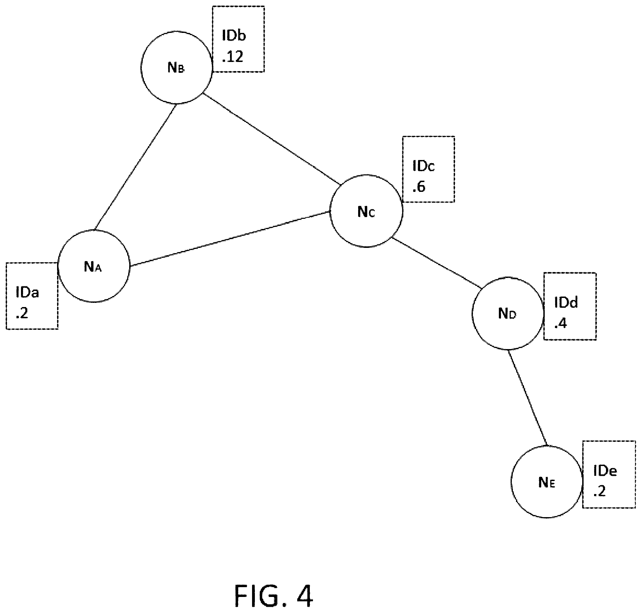

Les figures 3 et 4 représentent respectivement un cas d'une usurpation d'identité d'un nœud (figure 3) et un cas d'une usurpation d'adresse IP (figure 4). Les procédés de l'invention permettent d'éviter de telles attaques au sein du réseau.

Notamment, l'ID TABLE permet de faire correspondre de manière bijective : un identifiant d'un nœud, une adresse IP et un certificat d'authentification.

Un objectif de la table ID TABLE est de permettre la construction d'une table sécurisée comprenant la liste des nœuds ayant des certifications d'authentification validés et comportant des données de confiance vis-à-vis des nœuds connus de la table de routage. Ainsi un premier nœud qui est authentifié par un second nœud après un contrôle d'authentification par échanges de certificats selon le procédé de l'invention pourra transmettre des messages provenant de ce nœud à un autre nœud. De cette manière, la confiance d'un nœud se propage de proche en proche par un contrôle de nœud à nœud.

Un autre objectif de la table ID TABLE est de stocker les informations relatives aux données d'authentification des autres nœuds de sorte à pouvoir mettre à jour ces données constamment.

Lorsqu'un nœud rejoint le réseau pour la première fois, son adresse IP ne lui est peut-être pas encore attribuée lorsqu'il tente de joindre un nœud du réseau. Dans ce dernier cas, l'ID TABLE ne prend pas en compte le champ d'adresse IP du nœud dans la table ID TABLE et ne compare donc pas cette entrée avec le champ vide d'adresse IP des messages reçus. L'adresse IP sera, par la suite, ajoutée aux données d'authentification dans la table lorsque l'identification du nœud en question sera reconnue.

La figure 3 représente un réseau dans lequel les nœuds suivants sont illustrés avec leurs données d'adressage et d'identifiants :
- un premier nœud N_{A} a une adresse IP .2 et un identifiant ID_{A} ;
- un second nœud N_{B} a une adresse IP .12 et un identifiant ID_{B} ;
- un troisième nœud N_{C} a une adresse IP .6 et un identifiant ID_{C}.

Un nœud tiers noté Att1 tente une attaque en usurpant l'identifiant du nœud N_{A} : ID_{A} et une adresse IP .4.

Le procédé de contrôle de l'invention permet notamment d'organiser les données d'authentification de nœuds voisins, de manière à ce qu'un unique identifiant d'un nœud soit associé à une unique adresse IP et à un unique certificat d'authentification du même nœud.

Ainsi la configuration représentée à la figure 3 peut être détectée grâce aux fonctions d'authentification exploitant les données stockées et mises à jour dans l'ID TABLE par la comparaison des données des messages entrants et des données stockées dans l'ID TABLE.

La figure 4 représente un réseau dans lequel les nœuds suivants sont illustrés avec leurs données d'adressage et d'identifiants :
- un premier nœud N_{A} a une adresse IP .2 et un identifiant ID_{A} ;
- un second nœud N_{B} a une adresse IP .12 et un identifiant ID_{B} ;
- un troisième nœud N_{C} a une adresse IP .6 et un identifiant ID_{C} ;
- un quatrième nœud N_{D} a une adresse IP .4 et un identifiant ID_{D} ;
- un cinquième nœud N_{E} a une adresse IP .2 et un identifiant ID_{E}.

Le cinquième nœud N_{E} tente une attaque de l'intérieur du réseau par usurpation de l'adresse IP .2 du premier nœud N_{A}.

Le procédé de contrôle de l'invention permet notamment d'organiser les données d'authentification de nœuds voisins, de manière à ce qu'une unique adresse IP d'un nœud soit associée à un unique certificat d'authentification du même nœud et à son identifiant.

Ainsi la configuration représentée à la figure 4 peut être détectée grâce aux fonctions d'authentification exploitant les données stockées et mises à jour dans l'ID TABLE par la comparaison des données des messages entrants et des données stockées dans l'ID TABLE.

Lorsqu'un message est reçu et authentifié par un nœud, le composant d'authentification AUTH MOD traite les données d'authentification de sorte à les enregistrer dans l'ID TABLE, soit en créant une nouvelle entrée pour un nouveau nœud, soit en mettant à jour des données déjà enregistrées.

Lorsque les données contrôlées sont identiques à des données déjà présentes dans l'ID TABLE, l'ID TABLE n'est pas mise à jour. En revanche, une comparaison de données permet de vérifier l'authentification de messages provenant d'un nœud connu de la table de routage et donc de l'ID TABLE.

Les messages reçus lorsqu'ils sont signés peuvent être vérifiés grâce aux certificats enregistrés dans la table ID TABLE. Dans ce cas l'interrogation de la base peut s'effectuer en comparant l'adresse IP du message reçu et l'adresse IP correspondante stockée dans l'ID TABLE.

Une autre entrée possible est celle des identifiants des nœuds.

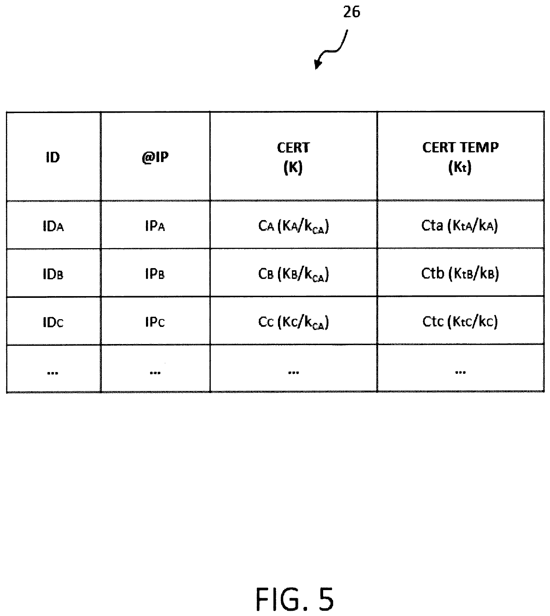

La figure 5 représente une table 26 ID TABLE comportant :
- les identifiants ID des nœuds connus de la table de routage ROUT PROT d'un nœud : ID_{A}, ID_{B}, ID_{C} ;
- les adresses IP des nœuds connus des données référencés dans le composant DDHCP : IP_{A}, IP_{B}, IP_{C} ;
- les certificats Cᵢ, notés CERT (K) sur la figure 5, des clefs publiques Kᵢ des nœuds i connus de la table de routage d'un nœud, lesdites clefs étant signées par une autorité de certification CA, les certificats sont également notés Kᵢ/K_{CA},
- les certificats Cₜᵢ, notés CERT TEMP (Kₜ) sur la figure 5, des clefs publiques temporaires Kₜᵢ de nœuds i connus de la table de routage d'un nœud, lesdites clefs publiques temporaires étant signées par la clef privée ki du nœud i, ces certificats sont également notés Kₜᵢ/kᵢ.

Parmi les fonctions d'authentification de l'invention, l'une d'elle comprend un procédé de sécurisation de transmission des données dans le réseau. Le procédé est mis en œuvre pour la sécurisation des transmissions des données de deux nœuds adjacents communiquant au travers du réseau.

De cette manière, la sécurisation des transmissions est assurée par la mise en œuvre du procédé de proche en proche d'un premier nœud générateur de messages vers un nœud destinataire. Entre le nœud générateur et le nœud destinataire, les nœuds coopère de proche en proche en transférant les données après un contrôle des données à transmettre.

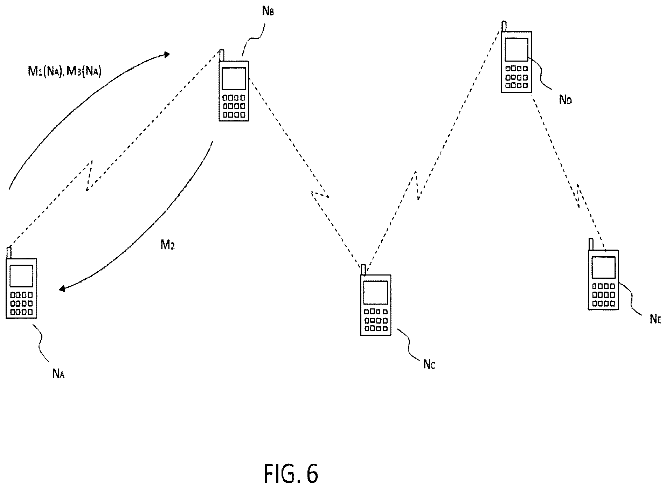

La figure 6 représente une transmission de messages d'un protocole de routage d'un nœud N_{A} vert un nœud N_{B}. Le nœud N_{A} est un nœud générateur de messages. Le nœud N_{E} est le nœud destinataire des messages provenant du nœud N_{A}.

Les nœuds N_{B}, N_{C}, N_{D} représentent des nœuds transférant, selon une route calculée, les messages du nœud N_{A} vers le nœud N_{E}.

Le procédé de sécurisation des données transmises permet de sécuriser le transfert d'un premier nœud sur la route calculée vers son nœud aval et ainsi de suite jusqu'au nœud destinataire.

Le procédé de sécurisation de l'invention s'appuie sur l'exploitation de données d'authentification qui ont été distribuées dans les nœuds du réseau. Parmi ces données distribuées, une clef privée ki, une clef publique Ki ont été distribuées à chaque nœud Nᵢ. Les données d'authentification peuvent être distribuées par une autorité de certification.

En outre, un certificat est généré avec notamment la clef publique Ki et est signée par l'autorité de certification CA. Un certificat auto-signé par l'autorité de certification CA peut être également transmis de manière à distribuer la signature de l'autorité de certification. Ce certificat permet notamment d'effectuer les contrôles des signatures lors de la réception de messages signés.

La figure 6 représente donc une première transmission du nœud N_{A} vers le nœud N_{B}. Le nœud N_{A} transmet un message au nœud N_{B} d'un protocole de routage par exemple OLSR qui peut être par exemple un message HELLO ou TC.

Selon un premier mode de réalisation du procédé de l'invention, au moins un message M₁ transmis est signé par la clef privée du nœud N_{A}, le message signé est noté M₁/k_{A}.

Une étape préliminaire consiste à comparer l'identifiant ID du nœud générateur N_{A} avec la liste des identifiants ID des nœuds connus et compris dans la table ID TABLE. L'identifiant ID peut être transmis par l'intermédiaire des messages du protocole OLSR, tel que le message M₁ qui peut être soit un message HELLO, soit un message TC.

Si l'identifiant est connu et authentifier grâce à la signature, alors le message M1 est transféré au prochain nœud se situant sur la route calculée par le protocole de routage. Si l'identifiant est inconnu ou comporte des données d'authentifications incomplètes ou non à jour, alors le procédé de sécurisation des données transmises peut être activé.

Dans ce dernier cas, lorsque le nœud N_{B} reçoit le premier message M₁, une fonction d'authentification peut stocker la signature du message M₁. Un second message M₂ est émis du nœud N_{B} vers le nœud N_{A} de manière à demander un troisième message M₃.

Un troisième message, sur requête du nœud N_{B}, est donc généré par le nœud N_{A} vers le nœud Le troisième message M₃ permet de transmettre des données d'authentifications du nœud N_{A} pour sécuriser le transfert des messages au travers du réseau. Le message M₃ comprend des données ENS₁ comportant :
- un premier certificat comprenant la clef publique K_{A} du premier nœud N_{A} signé par l'autorité de certification CA, notée K_{A}/k_{CA};
- un ensemble de donnée ENS₂ comportant :
   ▪ l'adresse IP_{A} du premier nœud N_{A} ;
   ▪ le premier certificat associé à l'adresse IP_{A} du premier nœud N_{A}.

En outre, l'ensemble de données ENS₂/k_{A}, aussi noté {IP_{A} ; K_{A}/K_{CA}}/k_{A}, est signé par la clef privée k_{A} du premier nœud N_{A}.

Lorsque le nœud N_{A} n'a pas encore d'adresse IP, l'adresse IP_{A} n'est pas envoyée parmi les données ENS₂. Les données sont stockées dans le nœud

La comparaison des données du message M₁ et M₃ permet d'authentifier le générateur de messages M₁ et d'établir un lien de confiance entre les deux nœuds. La signature des certificats par l'autorité de certification permet de renforcer ce lien de confiance entre les deux nœuds.

Les données d'authentification du nœud N_{A} sont sauvegardées dans la table ID TABLE du nœud N_{B} : l'identifiant du nœud N_{A}, l'adresse IP du nœud N_{A} et le certificat du nœud N_{A} lorsque ces derniers ne sont pas présents dans la table ID TABLE ou que les valeurs ne sont pas identiques à celles décodées des messages.

Le message M₃, qui comprend l'ensemble de donnée ENS₂ qui comporte l'adresse IP du nœud A et la clef publique signée, permet :
- d'une part, de garantir que le premier message M₁ est bien un message en provenance du nœud N_{A} et ;
- d'autre part, d'associer une adresse IP du nœud N_{A} à un unique certificat d'authentification et ;
- enfin, de garantir que le nœud N_{A} est bien en possession de la clé privée k_{A}.

Ainsi le nœud N_{B} a établi un lien sécurisé avec le nœud N_{A} de manière à traiter tous les messages signés du nœud N_{A} suite à cette phase d'authentification.

Un autre mode de réalisation de l'invention peut être également traité soit en concurrence de ce premier mode, soit de manière complémentaire.

Dans ce second mode, au moins un message M₁ transmis par le nœud N_{A} est signé par une clef privée temporaire du nœud N_{A}, le message signé est noté M₁/k_{tA}.

Une clef privée temporaire d'un nœud donné est générée par le nœud lui-même à partir des données d'authentification qui ont été transmises et certifiées par une autorité de certification. Ainsi, une partie de la gestion de la sécurité est déléguée à chaque nœud à partir de ces données d'authentification.

La requête contenue dans le message M2 est similaire dans le second mode de réalisation au premier mode de réalisation. Lorsque le nœud N_{B} reçoit le premier message M₁, une fonction d'authentification peut stocker la signature du message M₁. Un second message M₂ est émis du nœud N_{B} vers le nœud N_{A} de manière à demander un troisième message M₃.

Un troisième message, sur requête du nœud N_{B}, est donc généré par le nœud N_{A} vers le nœud Le troisième message M₃ comprend des données ENS₁ comportant :
- un premier certificat comprenant la clef publique K_{A} du premier nœud N_{A} signé par l'autorité de certification CA, noté K_{A}/k_{CA};
- un second certificat, notée K_{tA}/k_{A}, comprenant la clef publique temporaire K_{tA} du premier nœud N_{A} signée par la clef privée k_{A} du nœud N_{A} ;
- un ensemble de donnée ENS₂ comportant:
   ∘ l'adresse IP_{A} du premier nœud N_{A};
   ∘ le premier certificat associé à l'adresse IP_{A} du premier nœud N_{A}.

En outre, l'ensemble de données ENS2/kA, aussi noté {IPA ; K_{A}/K_{CA}}/k_{A}, est signé par la clef privée k_{A} du premier nœud N_{A}.
- un ensemble de donnée ENS₃ comportant :
   ∘ l'adresse IP_{A} du premier nœud N_{A} ;
   ∘ le second certificat associé à l'adresse IP_{A} du premier nœud N_{A}.

En outre, l'ensemble de données ENS₃/k_{tA}, aussi noté {IP_{A} ; K_{tA}/K_{A}}/k_{tA}, est signé par la clef privée temporaire k_{tA} du premier nœud N_{A}.

Le nœud N_{B} peut ne demander via le message M₂ que le second certificat et l'ensemble ENS₃ s'il connaît déjà le nœud N_{A} (le nœud N_{A} apparaît déjà dans l'ID TABLE).

Ce mode de réalisation permet de ne pas utiliser à de trop nombreuses reprises les clés maîtres distribuées par l'autorité de certification CA. Seules les clés temporaires sont utilisées pour signer les messages de manière à éviter les attaques dans le réseau.

Les deux modes de réalisation sont complémentaires dans la mesure où une première authentification peut être effectuée avec la signature de l'autorité de certification entre deux nœuds. Puis par la suite, des clefs temporaires peuvent être utilisées de manière à limiter l'utilisation des clés maîtres distribués par l'autorité de certification CA. Un avantage de cette utilisation complémentaire de ces deux modes de réalisation est de pouvoir changer de clefs temporaires fréquemment, de sorte à garantir un haut niveau de sécurité dans le réseau ad hoc tout en limitant le trafic généré par ces messages.

Un autre avantage est de gérer une sécurisation des transmissions de proche en proche, c'est-à-dire d'un nœud à un autre.

A chaque réception d'un message OLSR signé, le nœud récepteur du message M1 engage le procédé de contrôle de sorte à valider la signature et l'authenticité du message du nœud émetteur et/ou du nœud générateur avant de traiter le message ou de le transférer.

Chaque nœud émet des messages OLSR, tel que des messages TC, dans le réseau. La propagation des messages OLSR dans le réseau permet aux nœuds découvrant un nouveau nœud ou un nœud ayant changé de données d'authentification, tel qu'un nouveau certificat, d'engager un procédé de sécurisation des transmissions avec ce nouveau nœud.

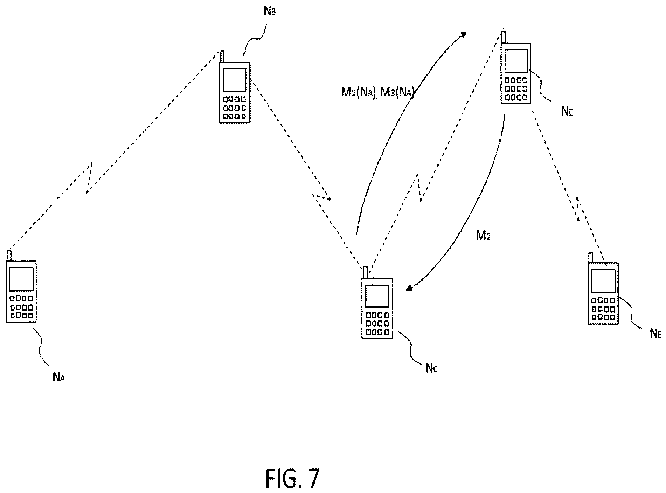

La figure 7 illustre ce fonctionnement de déploiement de la sécurisation des transmissions de proche en proche au travers le réseau.

Le nœud N_{C} transmet le message M₁ au nœud N_{D}. Le message M₁ est en provenance du nœud N_{A} et à destination du nœud N_{E}. les nœuds entre le nœud N_{A} et le nœud N_{E} sont des nœuds de transitions qui visent à contrôler l'authentification du nœud N_{A} puis à transférer les messages provenant de ce nœud s'il est de confiance vers un nœud destinataire. La sécurisation du transfert s'effectue de proche en proche.

Si par exemple le nœud N_{D} ne comporte pas d'entrée dans la table ID TABLE du nœud N_{A}, un fonctionnement analogue que celui décrit précédemment se produira entre deux nœuds consécutifs.

Le message M₁ est signé par la clef privée du nœud N_{A}, soit la clef privée maître soit la clef privée temporaire selon le mode de réalisation. Un message M₂ est généré du nœud N_{D} vers le nœud N_{C} à réception du message M₁ par le nœud N_{D}.

Le nœud N_{C} qui a préalablement authentifié le nœud N_{A} comme un nœud « sûr », peut transmettre le message M₁ et transférer les données contenues dans le message M₃ car le nœud N_{C} a lui-même sauvegardé ces informations dans sa table ID TABLE.

Le message M₃ est donc envoyé du nœud N_{C} vers le nœud N_{D}, sur requête du nœud N_{D}. Le troisième message M₃ comprend des données ENS₁ comportant, selon le mode de réalisation retenu :
- le premier certificat ou le premier et le second certificats, comme défini précédemment ;
- un ensemble de donnée ENS₂ ou les ensembles de données ENS₂ et ENS₃ comportant :
   ∘ l'adresse IP_{A} du premier nœud N_{A};
   ∘ le premier ou le second certificat associé à l'adresse IP_{A} du premier nœud N_{A} selon qu'il s'agit de l'ensemble de données ENS₂ ou ENS₃.

En outre, l'ensemble de données ENS₂/k_{A} ou ENS₃/kt_{A}, est signé respectivement soit par la clef privée du nœud N_{A} soit par la clef privée temporaire du nœud N_{A}.

La table ID TABLE peut stocker pour chaque entrée, c'est-à-dire pour chaque nœud nouvellement authentifié : son adresse IP, son identifiant, un premier certificat comprenant la clef publique du nœud signé par l'autorité de certification CA, un second certificat comprenant la clef publique temporaire du nœud signé par la clef privée du nœud. La table ID TABLE peut comprend en outre :
- un premier ensemble de données signé par la clef privée du nœud générateur du message, également considérée comme une première association comportant :
   ∘ l'adresse IP du nœud générateur du message, soit N_{A} dans l'exemple.
   ∘ le premier certificat.
- un second ensemble de données signé par la clef privée temporaire du nœud générateur du message, N_{A}, également considérée comme une seconde association comportant :
   ∘ l'adresse IP du nœud générateur du message, soit N_{A} dans l'exemple.
   ∘ le second certificat.

En outre, chaque nœud peut comporter une liste de révocation des certificats :
- Les seconds certificats ont une durée de vie limitée et sont renouvelés périodiquement. Les seconds certificats obsolètes sont révoqués. Les nouveaux seconds certificats sont transmis de proche en proche par les mécanismes illustrés au travers des figures 6 et 7. Chaque nœud met à jour sa liste de révocation des certificats lorsqu'il remplace dans ID TABLE l'ancien certificat par le nouveau.
- Le premier certificat peut être révoqué par le nœud le possédant.
   ∘ S'il possède un nouveau premier certificat signé par l'autorité de certification, il remplace le premier certificat obsolète par le nouvel premier certificat, modifie le second certificat (maintenant signé par la nouvelle clé privée), modifie les ensembles ENS₂ et ENS₃ en conséquence. Les nouveaux premiers et seconds certificats sont transmis de proche en proche par les mécanismes illustrés au travers des figures 6 et 7. Chaque nœud met à jour sa liste de révocation des certificats lorsqu'il remplace dans ID TABLE l'ancien certificat par le nouveau.
   ∘ S'il ne possède pas de nouveau premier certificat signé par l'autorité de certification, il doit transmettre un message M₄ signé par la clé privée en vigueur vers les noeuds de confiance les plus proches qu'il connaît (via ID TABLE et table de routage) indiquant qu'il souhaite révoquer tous ses certificats. A la réception d'un message M₄ et après contrôle de son authenticité, le nœud récepteur met à jour sa table ID TABLE en supprimant l'entrée relative au nœud générateur du message M₄ et sa liste de révocation des certificats et envoie un acquittement M₅ signé par sa clé privée temporaire vers le nœud générateur du message M₄. Le nœud générateur supprime définitivement ses éléments de sécurité dès lors qu'il a reçu suffisamment de message M₅ dont il a contrôlé l'authenticité. Il est noté que hors réseau, l'autorité de certification doit être informée de la révocation d'un certificat qu'elle avait signé pour qu'il puisse mettre à jour sa propre liste de révocation.

Un état intermédiaire « en suspens » entre non révoqué et révoqué peut être introduit pour qu'un nœud fasse part d'un comportement erratique d'un autre nœud. Cette information est introduite dans la liste de révocation des certificats du nœud ayant fait cette observation. La révocation des certificats du nœud en question ne peut être faite que par le nœud en question ou l'autorité de certification.

La liste de révocation des certificats gérée par un nœud peut être transmise aux autres nœuds sur modification et périodiquement par l'intermédiaire d'un message M₆ signé par sa clé privée temporaire. La révocation d'un certificat par l'intermédiaire des messages M₆ n'est prise en compte par un nœud (modification de sa liste de révocation des certificats) que s'il reçoit et authentifie la révocation du certificat de suffisamment de nœuds de confiance.

La liste de révocation des certificats gérée par l'autorité de certification peut être transmise aux nœuds via des nœuds du réseau par l'intermédiaire d'un message M₇ signé par l'autorité de certification. La révocation d'un certificat par l'intermédiaire des messages M₇ est immédiatement prise en compte par un nœud après authentification du message (modification de sa liste de révocation des certificats).

## Revendications

1. Procédé de sécurisation de transmission de données mis en œuvre par un nœud émetteur d'un réseau ad hoc, ledit réseau comportant une pluralité de nœuds (Nᵢ), les données étant transmises selon un protocole de routage d'un premier nœud (N_{A}) vers un second nœud (N_{B}), chaque nœud (Ni) comportant une clef privée (ki), une clef publique (Ki), un certificat (Ci) de la clef publique (Ki) signé par une autorité de certification (CA), **caractérisé en ce que** le premier nœud (N_{A}) transmet au second nœud (N_{B}) :
- au moins un premier message (M₁) signé (M₁/k_{A}) par la clef privée du premier nœud (NA) ;
- au moins un troisième message (M₃) vers le second nœud (N_{B}) lorsqu'un second message (M₂) provenant du second nœud (N_{B}) est reçu par le premier nœud (N_{A}) suite à l'émission du premier message (M₁), le troisième message (M₃) comportant un premier ensemble (ENS₁) de données d'initialisation comportant :
• un premier certificat comprenant la clef publique (K_{A}) du premier nœud (N_{A}) signé par l'autorité de certification (CA), noté K_{A}/k_{CA} ;
• un second ensemble de donnée (ENS2) comportant :
∘ l'adresse IP (IP_{A}) du premier nœud (N_{A}) ;
∘ le premier certificat associé à l'adresse IP (IP_{A}) du premier nœud (N_{A}) ;
le second ensemble de données (ENS₂/k_{A}) étant signé par la clef privée (k_{A}) du premier nœud (N_{A}).

2. Procédé de sécurisation selon la revendication 1, **caractérisé en ce que** chaque nœud comporte en outre une clef privée temporaire (kₜᵢ) et une clef publique temporaire (Kₜᵢ), les clefs temporaires comportant une durée de vie prédéfinie, le premier ensemble de données (ENS₁) comportant en outre :
- un second certificat comprenant la clef publique temporaire (K_{tA}) du premier nœud (N_{A}) signé par la clef privée (k_{A}) du premier nœud (N_{A}), noté K_{tA}/k_{A};
- un troisième ensemble de donnée (ENS₃) comportant :
• l'adresse IP (IP_{A}) du premier nœud (N_{A}) ;
• le second certificat associé à l'adresse IP (IP_{A}) du premier nœud (N_{A});
le troisième ensemble de données (ENS₃/k_{tA}) étant signé par la clef privée temporaire (k_{tA}) du premier nœud (N_{A}).

3. Procédé de sécurisation de transmission de données mis en œuvre par un nœud émetteur d'un réseau ad hoc, ledit réseau comportant une pluralité de nœuds (Nᵢ), les données étant transmises selon un protocole de routage d'un premier nœud (N_{A}) vers un second nœud (N_{B}), chaque nœud (Ni) comportant une clef privée (ki), une clef publique (Ki), un certificat (Ci) de la clef publique (Ki) signé par une autorité de certification (CA), une clef privée temporaire (kₜᵢ) et une clef publique temporaire (Kₜᵢ), les clefs temporaires comportant une durée de vie prédéfinie, une nouvelle paire étant générée à la fin de vie de la paire précédente, **caractérisé en ce que** le premier nœud (N_{A}) transmet au second nœud (N_{B}) :
- au moins un premier message (M₁) signé (M₁/k_{tA}) par la clef privée temporaire du premier nœud (N_{A}) ;
- au moins un troisième message (M₃) vers le second nœud (N_{B}) lorsqu'un second message (M₂) provenant du second nœud (N_{B}) est reçu par le premier nœud (N_{A}) suite à l'émission du premier message (M₁), le troisième message (M₃) comportant un premier ensemble (ENS₁) de données d'initialisation comportant :
• un second certificat comprenant la clef publique temporaire (K_{tA}) du premier nœud (N_{A}) signé par la clef privée (k_{A}) du premier nœud (N_{A}), notée K_{tA}/k_{A} ;
• un troisième ensemble de donnée (ENS₃) comportant :
∘ l'adresse IP (IP_{A}) du premier nœud (N_{A}) ;
∘ le second certificat associé à l'adresse IP (IP_{A}) du premier nœud (N_{A}),
le troisième ensemble de données (ENS₃/k_{tA}) étant signé par la clef privée temporaire (k_{tA}) du premier nœud (N_{A}).

4. Procédé de sécurisation de transmission de données mis en œuvre par un nœud émetteur d'un réseau ad hoc, ledit réseau comportant une pluralité de nœuds (Nᵢ), les données étant transmises selon un protocole de routage d'un premier nœud (N_{A}) vers un second nœud (N_{B}), **caractérisé en ce que** le procédé selon l'une des revendications 1 à 2 est effectué préalablement au procédé selon la revendication 3.

5. Procédé de sécurisation de transmission de données mis en œuvre par un nœud émetteur d'un réseau ad hoc, ledit réseau comportant une pluralité de nœuds (Nᵢ), les données étant transmises selon un protocole de routage d'un p^{ième} nœud (N_{P}) vers un q^{ième} nœud (N_{Q}), chaque nœud (Ni) comportant une clef privée (ki), une clef publique (Ki), un certificat (Ci) de la clef publique (Ki) signée par une autorité de certification (CA), une clef privée temporaire (kₜᵢ) et une clef publique temporaire (Kₜᵢ), les clefs temporaires comportant une durée de vie prédéfinie, une nouvelle paire étant générée à la fin de vie de la paire précédente, **caractérisé en ce qu'**un p^{ième} nœud transmet à un q^{ième} nœud des données de routage provenant du premier nœud (N_{A}), dit « nœud générateur » du message, les p^{ième} et q^{ième} nœuds étant des nœuds calculés sur la route permettant d'acheminer un message du nœud générateur vers un nœud destinataire, les dites données transmises comportant :
- au moins un premier message (M₁) signé (M₁/k_{tA}) par la clef privée temporaire du premier nœud (N_{A}) ;
- au moins un troisième message (M₃) lorsqu'un second message (M₂) provenant du second nœud est reçu par le premier nœud suite à l'émission du premier message (M₁), le troisième message (M₃) comportant :
• soit un premier ensemble (ENS₁) de données d'initialisation selon l'une quelconque des revendications 1 ou 2 ;
• soit un premier ensemble (ENS₁) de données d'initialisation selon la revendication 3.

6. Procédé de sécurisation selon l'une quelconque des revendications 2 à 5, **caractérisé en ce qu'**il comporte en outre un procédé de transmission des certificats révoqués tel que :
- Si ledit procédé de transmission est initié par le nœud propriétaire du premier certificat :
• Le nœud propriétaire du premier certificat transmet un message M₄ signé par sa clé privée en vigueur vers les nœuds de confiance les plus proches stipulant la révocation de ses certificats ;
• Le nœud propriétaire du premier certificat supprime définitivement ses éléments de sécurité dès lors qu'il a reçu suffisamment de messages M₅ d'acquittement dont il a contrôlé l'authenticité ;
- Si ledit procédé de transmission est initié par l'autorité de certification :
• L'autorité de certification charge un ou plusieurs nœuds de transmettre sa liste de certificats révoqués par l'intermédiaire d'un message M₇ signé par l'autorité de certification ;
- Si ledit procédé de transmission est entretenu par les nœuds du réseau :
• Un nœud transmet périodiquement sa liste de certificats révoqués par l'intermédiaire d'un message M₆ signé par sa clé privée temporaire.

7. Procédé de sécurisation selon l'une quelconque des revendications 2 à 5, **caractérisé en ce qu'**il comporte en outre un procédé de gestion d'une liste de révocation des certificats gérées par un nœud, tel que :
- le nœud intègre dans sa liste les premiers et seconds certificats obsolètes lorsqu'ils sont renouvelés par les nœuds générateurs (en possession de ces certificats) et transmis selon l'une quelconque des revendications 1 à 5 ;
- le nœud intègre dans sa liste les premier et second certificats révoqués extrait d'un message M₄ authentifié, issu du nœud en ayant la propriété et signé par la clé privée temporaire de ce nœud, et transmet un acquittement M₅ signé par sa clé temporaire vers le nœud générateur propriétaire des certificats révoqués ;
- le nœud intègre dans sa liste les certificats révoqués extraits de suffisamment de messages M₆ authentifiés, issus de plusieurs nœuds et signés par la clé privée temporaire de ces nœuds ;
- le nœud intègre dans sa liste les certificats révoqués extraits d'un message M₇ authentifié, signé par l'autorité de certification et transmis par des nœuds tiers.

8. Procédé de contrôle de données d'authentification mis en œuvre par un second nœud récepteur (N_{B}) d'un réseau ad hoc, les données d'authentification permettant d'assurer la sécurisation d'échanges de données utiles transitant d'un premier nœud émetteur (N_{A}) vers le second nœud récepteur (N_{B}), les données d'authentification étant transmises par le premier nœud émetteur (N_{A}) selon un procédé de l'une des revendications précédentes, **caractérisé en ce que** le procédé comprend :
- une extraction de données reçues par le second nœud (N_{B}) dont :
• l'identifiant du nœud générateur extrait de l'entête de la signature du premier message envoyé par le premier nœud (N_{A}) et ;
• la signature du premier message envoyé par le premier nœud (N_{A}) et ;
• le premier certificat (K_{A}/k_{CA}) extrait du troisième message (M₃) envoyé par le premier nœud (N_{A}) et ;
• le second ensemble de données (ENS₂/k_{A}) signé par la clef privée (k_{A}) du premier nœud (N_{A}) du troisième message (M₃) ;
- une génération d'une requête d'éléments de sécurité (M₂) à la réception du premier message (M₁) vers le premier nœud (N_{A}) si le nœud N_{A} est inconnu de N_{B} ou si le message M₁ n'est pas authentifié par le nœud N_{B} ;
- un enregistrement des données extraites dans une mémoire du second nœud (N_{B}) ;
- une vérification de la signature associée au premier certificat signée par l'autorité de certification aussi connue du nœud B ;
- une vérification de la possession du trousseau de clé k_{A}/K_{A} par le nœud N_{A} d'adresse IP IP_{A} en vérifiant la signature de l'ensemble ENS₂ signé par la clé privée k_{A} du nœud N_{A} ;
- une comparaison des adresses IP et des identifiants du nœud N_{A} contenus dans respectivement les premier et troisième messages permettant une vérification de l'authentification du premier nœud (N_{A}) ;
- une vérification de la signature du message M₁ à partir de la clé publique K_{A} signée par l'autorité de certification.

9. Procédé de contrôle selon la revendication précédente, **caractérisé en ce que** l'enregistrement des données est réalisé de sorte à faire correspondre les trois données suivantes :
- une unique identification du premier nœud (N_{A}) ;
- une adresse IP (IP_{A}) du premier nœud (N_{A}) ;
- un premier certificat de la clef publique du premier nœud signé par l'autorité de certification.

10. Procédé de contrôle selon l'une quelconque des revendications 8 à 9, **caractérisé en ce que** :
- l'extraction de données reçues par le second nœud (N_{B}) comprend en outre :
• le second certificat (K_{tA}/k_{CA}) du troisième message (M₃)
• le troisième ensemble de données (ENS₃/k_{tA}) signé par la clef temporaire privée (k_{tA}) du premier nœud (N_{A}) du troisième message (M₃) ;
- le procédé comprend en outre une vérification de la signature du second certificat à partir de la clé publique K_{A} signée par l'autorité de certification ;
- le procédé comprend en outre une vérification de la possession du trousseau de clé k_{tA}/K_{tA} par le nœud N_{A} d'adresse IP IP_{A} en vérifiant la signature de l'ensemble ENS₃ signé par la clé privée k_{tA} du nœud N_{A} ;
- le procédé comprend une vérification de la signature du message M1 à partir de la clé publique K_{tA} signée par la clé privée k_{A} du nœud N_{A} au lieu d'une vérification de la signature du message M₁ à partir de la clé publique K_{A} signée par l'autorité de certification.

11. Procédé de contrôle selon la revendication précédente, **caractérisé en ce que** l'enregistrement des données est réalisé de sorte à faire correspondre les quatre données suivantes :
- une unique identification du premier nœud (N_{A}) ;
- une adresse IP (IP_{A}) du premier nœud (N_{A}) ;
- un premier certificat (K_{A}/k_{CA}) de la clef publique du premier nœud signé par l'autorité de certification ;
- un second certificat (K_{tA}/k_{A}) de la clef publique temporaire (K_{tA}) du premier nœud (N_{A}) signé la clef privée (k_{A}) du premier nœud (N_{A}).

12. Procédé de sécurisation selon l'une quelconque des revendications 1 à 7 et procédé de contrôle selon l'une quelconque des revendications 8 à 11, **caractérisé en ce que** le protocole de routage est le protocole OLSR et que le premier message M₁ est un message de type HELLO ou TC.

13. Procédé de sécurisation selon l'une quelconque des revendications 1 à 7 et procédé de contrôle selon l'une quelconque des revendications 8 à 11, **caractérisé en ce qu'**au moins un nœud comprend un terminal mobile.

14. Nœud émetteur d'un réseau ad hoc, **caractérisé en ce qu'**il permet de sécuriser une transmission de données par la mise en œuvre du procédé de sécurisation de l'une quelconque des revendications 1 à 7 et 12 à 13.

15. Nœud récepteur d'un réseau ad hoc, **caractérisé en ce qu'**il permet de contrôler les données d'authentification d'un nœud émetteur par la mise en œuvre du procédé de contrôle de l'une quelconque des revendications 8 à 13.

## Patentansprüche

1. Sicherungsverfahren der Übertragung von Daten, das durch einen Senderknoten eines ad hoc-Netzes umgesetzt wird, wobei das genannte Netz eine Vielzahl von Knoten (Nᵢ) umfasst, wobei die Daten gemäß einem Routingprotokoll eines ersten Knotens (N_{A}) zu einem zweiten Knoten (N_{B}) übertragen werden, wobei jeder Knoten (Ni) einen privaten Schlüssel (ki), einen öffentlichen Schlüssel (Ki), ein Zertifikat (Ci) des öffentlichen Schlüssels, das von einer Zertifizierungsautorität (CA) unterzeichnet wird, umfasst, **dadurch gekennzeichnet, dass** der erste Knoten (N_{A}) auf den zweiten Knoten (N_{B}) überträgt:
- wenigstens eine erste Nachricht (M₁), die von dem privaten Schlüssel des ersten Knotens (N_{A}) unterzeichnet wird (M₁);
- wenigstens eine dritte Nachricht (M₃) zu dem zweiten Knoten (N_{B}), wenn eine zweite Nachricht (M₂), die aus dem zweiten Knoten (N_{B}) stammt, von dem ersten Knoten (N_{A}) im Anschluss an die Ausgabe der ersten Nachricht (M₁) empfangen wird, wobei die dritte Nachricht (M₃) eine erste Gruppe (ENS₁) von Initialisierungsdaten umfasst, umfassend:
• ein erstes Zertifikat, umfassend den öffentlichen Schlüssel (K_{A}) des ersten Schlüssels (N_{A}), der von der Zertifizierungsautorität (CA) unterzeichnet wird, bezeichnet mit K_{A}/k_{CA};
• eine zweite Gruppe von Daten (ENS2), umfassend:
∘ die IP-Adresse (IP_{A}) des ersten Knotens (N_{A});
∘ das erste Zertifikat, das der IP-Adresse (IP_{A}) des ersten Knotens (N_{A}) zugeordnet wird;
wobei die zweite Gruppe von Daten (ENS₂/kA) von dem privaten Schlüssel (k_{A}) des ersten Knotens (N_{A}) unterzeichnet wird.

2. Sicherungsverfahren gemäß Anspruch 1, **dadurch gekennzeichnet, dass** jeder Knoten darüber hinaus einen temporären privaten Schlüssel (kₜᵢ) und einen temporären öffentlichen Schlüssel (Kₜᵢ) umfasst, wobei die temporären Schlüssel eine vorbestimmte Lebensdauer umfassen, wobei die erste Gruppe von Daten (ENS₁) darüber hinaus umfasst:
- ein zweites Zertifikat, umfassend den temporären öffentlichen Schlüssel (K_{tA}) des ersten Knotens (N_{A}), der von dem privaten Schlüssel (k_{A}) des ersten Knotens (N_{A}) unterzeichnet wird, bezeichnet als K_{tA}/k_{A};
- eine dritte Gruppe von Daten (ENS₃), umfassend:
• die IP-Adresse (IP_{A}) des ersten Knotens (N_{A});
• das zweite Zertifikat, das der IP-Adresse (IP_{A}) des ersten Knotens (N_{A}) zugeordnet ist;
wobei die dritte Gruppe von Daten (ENS₃/k_{tA}) von dem temporären privaten Schlüssel (k_{tA}) des ersten Schlüssels (N_{A}) unterzeichnet wird.

3. Sicherungsverfahren der Übertragung von Daten, das durch einen Senderknoten eines ad hoc-Netzes umgesetzt wird, wobei das genannte Netz eine Vielzahl von Knoten (Nᵢ) umfasst, wobei die Daten gemäß einem Routingprotokoll eines ersten Knotens (N_{A}) zu einem zweiten Knoten (N_{B}) übertragen werden, wobei jeder Knoten (Ni) einen privaten Schlüssel (ki), einen öffentlichen Schlüssel (Ki), ein Zertifikat (Ci) des öffentlichen Schlüssels, das von einer Zertifizierungsautorität (CA) unterzeichnet wird, einen temporären privaten Schlüssel (kₜᵢ) und einen temporären öffentlichen Schlüssel (Kₜᵢ) umfasst, wobei die temporären Schlüssel eine vorbestimmte Lebensdauer umfassen, wobei ein neues Paar am Lebensende des vorherigen Paars erzeugt wird, **dadurch gekennzeichnet, dass** der erste Schlüssel (N_{A}) auf den zweiten Schlüssel (N_{B}) überträgt:
- wenigstens eine erste Nachricht (M₁), die von dem temporären privaten Schlüssel (M₁/k_{tA}) des ersten Schlüssels (N_{A}) unterzeichnet wird;
- wenigstens eine dritte Nachricht (M₃) zum zweiten Knoten (N_{B}), wenn eine zweite Nachricht (M₂), die vom zweiten Knoten (N_{B}) stammt, von dem ersten Knoten (N_{A}) im Anschluss an die Ausgabe der ersten Nachricht (M₁) empfangen wird, wobei die dritte Nachricht (M₃) eine erste Gruppe (ENS₁) von Initialisierungsdaten umfasst, umfassend:
• ein zweites Zertifikat, umfassend den temporären öffentlichen Schlüssel (K_{tA}) des ersten Knotens (N_{A}), der von dem privaten Schlüssel (k_{A}) des ersten Knotens (N_{A}) unterzeichnet wird, bezeichnet als K_{tA}/k_{A};
• eine dritte Gruppe von Daten (ENS₃), umfassend:
∘ die IP-Adresse (IP_{A}) des ersten Knotens (N_{A});
∘ das zweite Zertifikat, das der IP-Adresse (IP_{A}) des ersten Knotens (N_{A}) zugeordnet ist,
wobei die dritte Gruppe von Daten (ENS₃/k_{tA}) von dem temporären privaten Schlüssel (k_{TA}) des ersten Knotens (N_{A}) unterzeichnet wird.

4. Sicherungsverfahren der Übertragung von Daten, das durch einen Senderknoten eines ad hoc-Netzes umgesetzt wird, wobei das genannte Netz eine Vielzahl von Knoten (Nᵢ) umfasst, wobei die Daten gemäß einem Routingprotokoll eines ersten Knotens (N_{A}) zu einem zweiten Knoten (N_{B}) übertragen werden, **dadurch gekennzeichnet, dass** das Verfahren gemäß einem der Ansprüche 1 bis 2 vor dem Verfahren gemäß Anspruch 3 durchgeführt wird.

5. Sicherungsverfahren der Übertragung von Daten, das durch einen Senderknoten eines ad hoc-Netzes umgesetzt wird, wobei das genannte Netz eine Vielzahl von Knoten (Nᵢ) umfasst, wobei die Daten gemäß einem Routingprotokoll eines p. Knotens (N_{P}) zu einem q. Knoten (N_{Q}) übertragen werden, wobei jeder Knoten (Ni) einen privaten Schlüssel (ki), einen öffentlichen Schlüssel (Ki), ein Zertifikat (Ci) des öffentlichen Schlüssels (Ki), das von einer Zertifizierungsautorität (CA) unterzeichnet wird, einen temporären privaten Schlüssel (k_{Ti}) und einen temporären öffentlichen Schlüssel (Kₜᵢ) umfasst, wobei die temporären Schlüssel eine vorbestimmte Lebensdauer umfassen, wobei ein neues Paar am Lebensende des vorherigen Paars erzeugt wird, **dadurch gekennzeichnet, dass** ein p. Knoten auf einen q. Knoten Routingdaten überträgt, die von dem ersten Knoten (N_{A}), genannt "Erzeugerknoten" der Nachricht stammen, wobei die p. und q. Knoten Knoten sind, die auf dem Weg berechnet werden, der das Verbringen einer Nachricht des Erzeugerknotens zu einem Bestimmungsknoten zulassen, wobei die genannten übertragenen Daten umfassen:
- wenigstens eine erste Nachricht (M₁), die von dem temporären privaten Schlüssel des ersten Knotens (N_{A}) unterzeichnet wird (M₁/k_{tA});
- wenigstens eine dritte Nachricht (M₃), wenn eine zweite Nachricht (M₂), die von dem zweiten Knoten stammt, im Anschluss an die Ausgabe der ersten Nachricht (M₁) von dem ersten Knoten empfangen wird, wobei die dritte Nachricht (M₃) umfasst:
• entweder eine erste Gruppe (ENS₁) von Initialisierungsdaten gemäß irgendeinem der Ansprüche 1 oder 2;
• oder eine erste Gruppe (ENS₁) von Initialisierungsdaten gemäß Anspruch 3.

6. Sicherungsverfahren gemäß irgendeinem der Ansprüche 2 bis 5, **dadurch gekennzeichnet, dass** es darüber hinaus ein Übertragungsverfahren der widerrufenen Zertifikate umfasst, derart, dass:
- wenn das genannte Übertragungsverfahren von dem Eigentümerknoten des ersten Zertifikats initiiert wird;
• überträgt der Eigentümerknoten des ersten Zertifikats eine Nachricht M4, die von seinem geltenden privaten Schlüssel unterzeichnet wird, auf die am nächsten gelegenen vertrauenswürdigen Knoten, die das Widerrufen seiner Zertifikate vorschreiben;
• löscht der Eigentümerknoten des ersten Zertifikats seine Sicherheitselemente endgültig, sofern er ausreichende Quittierungsnachrichten M₅ empfangen hat, deren Authentizität er kontrolliert hat;
- wenn das genannte Übertragungsverfahren von der Zertifizierungsautorität initiiert wird:
• beauftragt die Zertifizierungsautorität einen oder mehrere Knoten mit dem Übertragen ihrer Liste von widerrufenen Zertifikaten mittels eines von der Zertifikationsautorität unterzeichneten Nachricht M₇;
- wenn das genannte Übertragungsverfahren von den Knoten des Netzes unterhalten wird:
• überträgt ein Knoten periodisch seine Liste von widerrufenen Zertifikaten mittels einer Nachricht M₆, die von seinem temporären privaten Schlüssel unterzeichnet wird.

7. Sicherungsverfahren gemäß irgendeinem der Ansprüche 2 bis 5, **dadurch gekennzeichnet, dass** es darüber hinaus ein Verwaltungsverfahren einer Widerrufungsliste der Zertifikate umfasst, die von einem Knoten verwaltet werden, derart, dass:
- der Knoten in seine Liste die ersten und zweiten veralteten Zertifikate aufnimmt, wenn sie von den Erzeugerknoten erneuert werden (die im Besitz dieser Zertifikate sind) und gemäß irgendeinem der Ansprüche 1 bis 5 übertragen werden;
- der Knoten in seine Liste die ersten und zweiten widerrufenen Zertifikate aufnimmt, die aus einer authentifizierten Nachricht M₄ extrahiert wurden, die aus dem Knoten stammt, der das Eigentum daran besitzt, und von dem temporären privaten Schlüssel dieses Knotens unterzeichnet wird und eine Quittierung M₅, die von seinem temporären Schlüssel unterzeichnet wird, auf den Erzeugerknoten überträgt, der der Eigentümer der widerrufenen Zertifikate ist;
- der Knoten in seine Liste die widerrufenen Zertifikate aufnimmt, die von ausreichend authentifizierten Nachrichten M₆ extrahiert werden, die aus mehreren Knoten stammen und von dem temporären privaten Schlüssel dieser Knoten unterzeichnet werden;
- der Knoten in seine Liste die widerrufenen Zertifikate aufnimmt, die aus einer authentifizierten Nachricht M₇ extrahiert werden, die von der Zertifizierungsautorität unterzeichnet und von dritten Knoten übertragen wird.

8. Kontrollverfahren von Authentifizierungsdaten, das von einem zweiten Empfängerknoten (N_{B}) eines ad hoc-Netzes umgesetzt wird, wobei die Authentifizierungsdaten das Gewährleisten der Sicherung des Austauschs von nützlichen Daten zulässt, die von einem ersten Senderknoten (N_{A}) zu dem zweiten Empfängerknoten (N_{B}) übergehen, wobei die Authentifizierungsdaten von dem ersten Senderknoten (N_{A}) gemäß einem Verfahren nach einem der voranstehenden Ansprüche übertragen werden, **dadurch gekennzeichnet, dass** das Verfahren umfasst:
- eine Extraktion von Daten, die von dem zweiten Knoten (N_{B}) empfangen werden, darunter:
• die Kennung des Erzeugerknotens, die aus der Kopfzeile der Signatur der ersten Nachricht extrahiert wird, die vom ersten Knoten (N_{A}) versandt wird und;
• die Signatur der ersten Nachricht, die vom ersten Knoten (N_{A}) versandt wird und;
• das erste Zertifikat (K_{A}/k_{CA}), das aus der dritten Nachricht (M₃) extrahiert wird, die vom ersten Knoten (N_{A}) versandt wird und;
• die zweite Gruppe von Daten (ENS₂/k_{A}), die von dem privaten Schlüssel (k_{A}) des ersten Knotens (N_{A}) der dritten Nachricht (M₃) unterzeichnet wird;
- eine Erzeugung einer Anforderung von Sicherheitselementen (M₂) beim Empfang der ersten Nachricht (M₁) zum ersten Knoten (N_{A}), wenn der Knoten N_{A} N_{B} unbekannt ist oder wenn die Nachricht M₁ von dem Knoten N_{B} nicht authentifiziert wird;
- ein Abspeichern der extrahierten Daten in einen Speicher des zweiten Knotens (N_{B});
- eine Überprüfung der Signatur, die dem ersten Zertifikat zugeordnet wird, das von der Zertifizierungsautorität unterzeichnet wird, das dem Knoten B ebenfalls bekannt ist;
- eine Überprüfung des Besitzes des Schlüsselbundes k_{A}/K_{A} durch den Knoten N_{A} der IP-Adresse IP_{A} durch Überprüfen der Signatur der Gruppe ENS₂, die von dem privaten Schlüssle k_{A} des Knotens N_{A} unterzeichnet wird;
- einen Vergleich der IP-Adressen und der Kennungen des Knotens NA, die jeweils in der ersten und dritten Nachricht enthalten sind, die eine Überprüfung der Authentifizierung des ersten Knotens (N_{A}) erlauben;
- eine Überprüfung der Signatur der Nachricht M₁ ausgehend von dem öffentlichen Schlüssel K_{A}, der von der Zertifizierungsautorität unterzeichnet wird.

9. Kontrollverfahren gemäß dem voranstehenden Anspruch, **dadurch gekennzeichnet, dass** das Abspeichern der Daten derart erfolgt, dass die drei folgenden Daten übereinstimmend gemacht werden:
- eine einzigartige Kennung des ersten Knotens (N_{A});
- eine IP-Adresse (IP_{A}) des ersten Knotens (N_{A});
- ein erstes Zertifikat des öffentlichen Schlüssels des ersten Knotens, der von der Zertifizierungsautorität unterzeichnet wird.

10. Kontrollverfahren gemäß irgendeinem der Ansprüche 8 bis 9, **dadurch gekennzeichnet, dass**:
- die Extraktion von Daten, die von dem zweiten Knoten (N_{B}) empfangen werden, darüber hinaus umfasst:
• das zweite Zertifikat (K_{tA}/k_{CA}) der dritten Nachricht (M₃)
• die dritte Gruppe von Daten (ENS₃/k_{tA}), die vom privaten temporären Schlüssel (k_{tA}) des ersten Knotens (N_{A}) der dritten Nachricht (M₃) unterzeichnet wird;
- das Verfahren darüber hinaus eine Überprüfung der Signatur des zweiten Zertifikats ausgehend von dem öffentlichen Schlüssel K_{A} umfasst, der von der Zertifizierungsautorität unterzeichnet wird;
- das Verfahren darüber hinaus eine Überprüfung des Besitzes des Schlüsselbundes k_{tA}/K_{tA} durch den Knoten N_{A} der IP-Adresse IP_{A} durch Überprüfen der Signatur der Gruppe ENS₃ umfasst, die von dem privaten Schlüssel k_{tA} des Knotens N_{A} unterzeichnet wird;
- das Verfahren eine Überprüfung der Signatur der Nachricht M₁ ausgehend von dem öffentlichen Schlüssel K_{tA}, der von dem privaten Schlüssel k_{A} des Knotens N_{A} unterzeichnet wird, anstatt einer Überprüfung der Signatur der Nachricht M₁ ausgehend von dem öffentlichen Schlüssel K_{A}, der von der Zertifizierungsautorität unterzeichnet wird, umfasst.

11. Kontrollverfahren gemäß dem voranstehenden Anspruch, **dadurch gekennzeichnet, dass** das Abspeichern der Daten derart durchgeführt wird, dass die vier folgenden Daten übereinstimmend gemacht werden:
- eine einzigartige Kennung des ersten Knotens (N_{A});
- eine IP-Adresse (IP_{A}) des ersten Knotens (N_{A});
- ein erstes Zertifikat (K_{A}/K_{CA}) des öffentlichen Schlüssels des ersten Knotens, der von der Zertifizierungsautorität unterzeichnet wird;
- ein zweites Zertifikat (K_{tA}/k_{A}) des temporären öffentlichen Schlüssels (K_{tA}) des ersten Knotens (N_{A}), der vom privaten Schlüssel (k_{A}) des ersten Knotens (N_{A}) unterzeichnet wird.

12. Sicherungsverfahren gemäß irgendeinem der Ansprüche 1 bis 7 und Kontrollverfahren gemäß irgendeinem der Ansprüche 8 bis 11, **dadurch gekennzeichnet, dass** das Routingprotokoll das Protokoll OLSR ist und die erste Nachricht M₁ eine Nachricht vom Typ HELLO oder TC ist.

13. Sicherungsverfahren gemäß irgendeinem der Ansprüche 1 bis 7 und Kontrollverfahren gemäß irgendeinem der Ansprüche 8 bis 11, **dadurch gekennzeichnet, dass** wenigstens ein Knoten ein mobiles Terminal umfasst.

14. Senderknoten eines ad hoc-Netzes, **dadurch gekennzeichnet, dass** es das Sichern einer Datenübertragung durch das Umsetzen des Sicherungsverfahrens nach irgendeinem der Ansprüche 1 bis 7 und 12 bis 13 zulässt.

15. Empfängerknoten eines ad hoc-Netzes, **dadurch gekennzeichnet, dass** er das Kontrollieren der Authentifizierungsdaten eines Senderknotens durch das Umsetzen des Kontrollverfahrens nach irgendeinem der Ansprüche 8 bis 13 zulässt.

## Claims

1. Method for protecting data transmission implemented by a sending node of an ad hoc network, said network including a plurality of nodes (Nᵢ), with the data being transmitted according to a routing protocol from a first node (N_{A}) to a second node (N_{B}), each node (Nᵢ) including a private key (kᵢ), a public key (Kᵢ), a certificate (Cᵢ) of the public key (Kᵢ) signed by a certification authority (CA), **characterised in that** the first node (N_{A}) transmits to the second node (N_{B}):
- at least one first message (M₁) signed (M₁/k_{A}) with the private key of the first node (N_{A});
- at least one third message (M₃) to the second node (N_{B}) when a second message (M₂) coming from the second node (N_{B}) is received by the first node (N_{A}) following the sending of the first message (Mi), the third message (M₃) containing a first set (ENS₁) of initialisation data comprising:
• a first certificate including the public key (K_{A}) of the first node (N_{A}) signed by a certification authority (CA), designated K_{A}/k_{CA};
• a second data set (ENS2) comprising:
∘ the IP address (IP_{A}) of the first node (N_{A});
∘ the first certificate associated with the IP address (IP_{A}) of the first node (N_{A});
the second data set (ENS₂/k_{A}) being signed with the private key (k_{A}) of the first node (N_{A}).

2. Method for protecting according to claim 1, **characterised in that** each node further comprises a temporary private key (kₜᵢ) and a temporary public key (Kₜᵢ), with the temporary keys comprising a predefined lifetime, the first data set (ENS₁) further comprising:
- a second certificate including the temporary public key (K_{tA}) of the first node (N_{A}) signed with the private key (k_{A}) of the first node (N_{A}), designated KtA/kA;
- a third data set (ENS₃) comprising:
• the IP address (IP_{A}) of the first node (N_{A});
• the second certificate associated with the IP address (IP_{A}) of the first node (N_{A});
the third data set (ENS₃/k_{tA}) being signed with the temporary private key (ktA) of the first node (N_{A}).

3. Method for protecting data transmission implemented by a sending node of an ad hoc network, said network including a plurality of nodes (Nᵢ), with the data being transmitted according to a routing protocol from a first node (N_{A}) to a second node (N_{B}), each node (Nᵢ) including a private key (kᵢ), a public key (Kᵢ), a certificate (Cᵢ) of the public key (Kᵢ) signed by a certification authority (CA), a temporary private key (kₜᵢ) and a temporary public key (Kₜᵢ), with the temporary keys comprising a predefined lifetime, a new pair being generated at the end of the life of the preceding pair, **characterised in that** the first node (N_{A}) transmits to the second node (N_{B}):
- at least one first message (M₁) signed (M₁/k_{tA}) with the temporary private key of the first node (N_{A});
- at least one third message (M₃) to the second node (N_{B}) when a second message (M₂) coming from the second node (N_{B}) is received by the first node (N_{A}) following the sending of the first message (M₁), the third message (M₃) containing a first set (ENS₁) of initialisation data comprising:
• a second certificate including the temporary public key (K_{tA}) of the first node (N_{A}) signed with the private key (k_{A}) of the first node (N_{A}), designated KtA/kA;
• a third data set (ENS₃) comprising:
∘ the IP address (IP_{A}) of the first node (N_{A});
∘ the second certificate associated with the IP address (IP_{A}) of the first node (N_{A}),
the third data set (ENS₃/k_{tA}) being signed with the temporary private key (ktA) of the first node (N_{A}).

4. Method for protecting data transmission implemented by a sending node of an ad hoc network, said network including a plurality of nodes (Nᵢ), with the data being transmitted according to a routing protocol from a first node (N_{A}) to a second node (N_{B}), **characterised in that** the method according to one of claims 1 to 2 is carried out prior to the method according to claim 3.

5. Method for protecting data transmission implemented by a sending node of an ad hoc network, said network including a plurality of nodes (Nᵢ), with the data being transmitted according to a routing protocol from a p^{th} node (N_{P}) to a q^{th} node (N_{Q}), each node (Nᵢ) including a private key (kᵢ), a public key (Kᵢ), a certificate (Cᵢ) of the public key (Kᵢ) signed by a certification authority (CA), a temporary private key (kₜᵢ) and a temporary public key (Kₜᵢ), with the temporary keys comprising a predefined lifetime, a new pair being generated at the end of the life of the preceding pair, **characterised in that** a p^{th} node transmits to a q^{th} node routing data coming from the first node (N_{A}), referred to as a "generator node" of the message, with the p^{th} and q^{th} nodes being nodes calculated on the route making it possible to convey a message from the generator node to a destination node, said transmitted data comprising:
- at least one first message (M₁) signed (M₁/k_{tA}) with the temporary private key of the first node (N_{A});
- at least one third message (M₃) when a second message (M₂) coming from the second node is received by the first node following the sending of the first message (M₁), the third message (M₃) comprising:
• either a first set (ENS₁) of initialisation data according to any of claims 1 or 2;
• or a first set (ENS₁) of initialisation data according to claim 3.

6. Method for protecting according to any of claims 2 to 5, **characterised in that** it further comprising a method for transmitting revoked certificates such that:
- If said method of transmission is initiated by the node that owns the first certificate:
• The node that owns the first certificate transmits a message M₄ signed with its current private key to the closest trusted nodes stipulating the revocation of its certificates;
• The node that owns the first certificate definitively deletes its security elements as soon as it has received enough acknowledgment messages M₅ of which it has checked the authenticity;
- If said method of transmission is initiated by the certification authority:
• The certification authority charges one or several nodes to transmit its list of revoked certificates by the intermediary of a message M₇ signed by a certification authority;
- If said method of transmission is maintained by the nodes of the network:
• A node periodically transmits its list of revoked certificates by the intermediary of a message M₆ signed with its temporary private key.

7. Method for protecting according to any of claims 2 to 5, **characterised in that** it further comprises a method for generating a list of revocation of the certificates managed by a node, such that:
- the node integrates into its list the first and second obsolete certificates when they are renewed by the generator nodes (in possession of these certificates) and transmitted according to any of claims 1 to 5;
- the node integrates into its list the first and second revoked certificates extracted from an authenticated message M₄, coming from the node that has ownership of it and signed with the temporary private key of this node, and transmits an acknowledgement M₅ signed with its temporary key to the generator node that owns the revoked certificates;
- the node integrates into its list the revoked certificates extracted from enough authenticated messages M₆, coming from several nodes and signed with the temporary private key of these nodes;
- the node integrates into its list the revoked certificates extracted from an authenticated message M₇, signed by a certification authority and transmitted by third-party nodes.

8. Method for checking authentication data implemented by a second receiving node (N_{B}) of an ad hoc network, with the authentication data making it possible to provide the protection for useful data exchange transiting from a first sending node (N_{A}) to the second receiving node (N_{B}), with the authentication data being transmitted by the first sending node (N_{A}) according to a method of one of the preceding claims, **characterised in that** the method comprises:
- an extraction of data received by the second node (N_{B}) of which:
• the identifier of the generator node extracts the header of the signature from the first message sent by the first node (N_{A}) and;
• the signature from the first message sent by the first node (N_{A}) and;
• the first certificate (K_{A}/k_{CA}) extracted from the third message (M₃) sent by the first node (N_{A}) and;
• the second data set (ENS₂/k_{A}) signed with the private key (k_{A}) of the first node (N_{A}) of the third message (M₃);
- a generation of a request for security elements (M₂) at the reception of the first message (M₁) to the first node (N_{A}) if the node N_{A} is unknown to N_{B} or if the message M₁ is not authenticated by the node N_{B};
- a recording of the extracted data in a memory of the second node (N_{B});
- a verification of the signature associated with the first certificate signed by the certification authority also known to node B;
- a verification of the possession of the set of keys k_{A}/K_{A} by the node N_{A} of IP address IP_{A} by verifying the signature of the set ENS₂ signed with the private key k_{A} of the node N_{A};
- a comparison of the IP addresses and of the identifiers of the node N_{A} contained respectively in the first and third messages allowing for a verification of the authentication of the first node (N_{A});
- a verification of the signature of the message M₁ using the public key K_{A} signed by the certification authority.

9. Method for checking according to the preceding claim, **characterised in that** the recording of the data is carried out in such a way as to have the following three piece of data correspond:
- a unique identification of the first node (N_{A});
- an IP address (IP_{A}) of the first node (N_{A});
- a first certificate of the public key of the first node signed by a certification authority.

10. Method for checking according to any of claims 8 to 9, **characterised in that**:
- the extraction of data received by the second node (N_{B}) further comprises:
• the second certificate (K_{tA}/k_{CA}) of the third message (M₃)
• the third data set (ENS₃/k_{tA}) signed with the temporary private key (k_{tA}) of the first node (N_{A}) of the third message (M₃);
- the method further comprises a verification of the signature of the second certificate using the public key K_{A} signed by the certification authority;
- the method further comprises a verification of the possession of the set of keys k_{tA}/K_{tA} by the node N_{A} of the IP address IP_{A} by checking the signature of the set ENS₃ signed with the private key k_{tA} of the node N_{A};
- the method comprises a verification of the signature of the message M₁ using the public key K_{tA} signed with the private key k_{A} of the node N_{A} instead of a verification of the signature of the message M₁ using the public key K_{A} signed by the certification authority.

11. Method for checking according to the preceding claim, **characterised in that** the recording of data is carried out in such a way as to have the following four pieces of data correspond:
- a unique identification of the first node (N_{A});
- an IP address IP (IP_{A}) of the first node (N_{A});
- a first certificate (K_{A}/K_{CA}) of the public key of the first node signed by a certification authority;
- a second certificate (K_{tA}/k_{A}) of the temporary public key (K_{tA}) of the first node (N_{A}) signed with the private key (k_{A}) of the first node (N_{A}).

12. Method for protecting according to any of claims 1 to 7 and method for checking according to any of claims 8 to 11, **characterised in that** the routing protocol is the OLSR protocol and that the first message M₁ is a message of the HELLO or TC type.

13. Method for protecting according to any of claims 1 to 7 and method for checking according to any of claims 8 to 11, **characterised in that** at least one node comprises a mobile terminal.

14. Sending node of an ad hoc network, **characterised in that** it makes it possible to protect data transmissions by implementing the method for protecting of any one of claims 1 to 7 and 12 to 13.

15. Receiving node of an ad hoc network, **characterised in that** it makes it possible to check the authentication data of a sending node by the implementation of the method for checking of any one of claims 8 to 13.
